# EUROPÄISCHE PATENTSCHRIFT

(11) **EP 1 298 771 B1**
(45) Veröffentlichungstag und Bekanntmachung des Hinweises auf die Patenterteilung: **19.10.2011**
(21) Anmeldenummer: 02020368.3
(22) Anmeldetag: 12.09.2002
(51) Int. Cl.: H02H 7/085, H02P 1/40

(54) **Steuereinrichtung für einen Motorstarter**
Controller for a motor starter
Dispositif de commande pour un démarreur de moteur

(30) Priorität: 26.09.2001 DE 10147531
(43) Veröffentlichungstag der Anmeldung: 02.04.2003
(73) Patentinhaber: Eaton Industries GmbH, 53115 Bonn (DE)
(72) Erfinder: Borchmann, Oliver, 50935 Köln (DE); Jagusch, Lothar, 53123 Bonn (DE); Ludwig, Hans, 53604 Bad Honnef (DE); Skupin, Johann, 53840 Troisdorf (DE); Trapp, Ulrich, 53127 Bonn (DE); Stanke, Stephan, 53359 Rheinbach (DE); Dreiskemper, Klaus, 33129 Delbrück (DE); Gauxmann, Berthold, 53343 Wachtberg (DE); Hilger, Manfred, 40789 Monheim (DE)
(74) Vertreter: Müller-Gerbes Wagner Albiger Patentanwälte

(56) Entgegenhaltungen:
- EP-A- 0 837 536
- DE-A1- 19 820 667
- US-A- 5 493 468
- US-B1- 6 294 888

## Beschreibung

Moderne Maschinen und Anlagen werden in zunehmenden Maße automatisiert. Damit verfügen sie über eine ständig wachsende Zahl von Geräten mit Ein-/Ausgangsfunktionen. Sensoren und Aktoren liefern zusätzliche und detaillierte Informationen über eingehende Befehle, Ausgangssignale und Schaltzustände.

Motorstarter werden dazu verwendet, Elektromotoren einer Maschine oder Anlage bei entsprechendem Bedarf - automatisch oder von Hand - zu starten bzw. zu stoppen oder zu reversieren und während des Betriebs des Elektromotors dessen Temperatur zu überwachen, um Motorüberhitzungen vorzubeugen und gleichzeitig die Leistungsaufnahme zu überwachen, um einen Schutz gegen unvorhergesehenes Blockieren des Motors zu gewährleisten. Neben der reinen Motorsteuerung übernimmt der Motorstarter von daher auch Motorschutzaufgaben. Bei der Anschlusstechnik mit konventioneller Verdrahtung wird jeder einzelne Kontakt eines Gerätes konventionell, d. h. parallel, auf die Anschaltbaugruppen vor Ort an jeder Maschine oder zum Schaltschrank hin verdrahtet. Die Folge ist eine größere Anzahl von Schraubklemmen, Ein/Ausgangskarten und Leitungssträngen. Damit steigen die Kosten für Planung, Projektierung und Verdrahtung.

Die Vernetzung der einzelnen Geräte über ein Bussystem hilft, diese Kosten zu senken. Dabei wird die Verdrahtung enorm reduziert, durch vorverdrahtete Baugruppen der Projektierungsaufwand verringert und die Inbetriebnahme durch eine geringere Anzahl an Schraubklemmen und die bequeme Adressierung über die Bussoftware vereinfacht. Ein Beispiel für ein solches Bussystem ist das sogenannte AS-Interface-Bussystem, kurz ASI-Bussystem, welches für binäre Sensoren (Öffner-, Schließer- und Hilfskontakte) und Aktoren (Relais, Schütze, Lampen) in der untersten Feldebene konzipiert ist. Motorstarter mit einer Steuereinrichtung, die an ein solches Bussystem, insbesondere ein ASI-Bussystem anschließbar sind, werden bereits mit Erfolg eingesetzt. Nachteilig bei den bisher bekannten, mit einem ASI-Bussystem vernetzbaren Motorstartern ist es jedoch, dass diese jeweils individuell auf einen bestimmten Einsatzzweck zugeschnitten sind, wodurch sich eine hohe Variantenvielfalt ergibt, die zu Planungsschwierigkeiten und großem Produktions- und Lageraufwand führt. So sind bisher jeweils unterschiedliche Steuereinrichtungen für als Direktstarter ausgelegte Motorstarter, d. h. Motorstarter, die lediglich eine An-/Aus-Funktion am Elektromotor hervorrufen können sowie Steuereinrichtungen für als Wendestarter ausgebildete Motorstarter vorgesehen, d. h. für solche Motorstarter, die neben der An-/Aus-Funktion für den Elektromotor auch einen Wechsel der Laufrichtung vornehmen können. Hinzu kommt, dass für unterschiedliche Größen von Elektromotoren, die sich infolgedessen in ihrer Leistungsaufnahme unterscheiden, jeweils verschiedene Varianten von Motorstartern bzw. entsprechenden Steuereinrichtungen für diese Motorstarter vonnöten sind, um die Überwachung der Leistungsaufnahme als Blockierschutz zu gewährleisten, so dass sich eine sehr große Vielfalt an unterschiedlichen Motorstartern bzw. Steuereinrichtungen hierfür ergibt.

Die US 5,493 468 A betrifft ein Kontaktiersystem mit einem Kontrollmodul. Zum Ansteuern der Energiezufuhr an eine elektrische Last. Dabei sind Dip-Schalter am Controller vorgesehen, um Konfigurationsänderungen einzugeben.

Die Erfindung hat sich daher die Aufgabe gestellt, eine möglichst universell einsetzbare Steuereinrichtung für einen über ein Bussystem, insbesondere ein ASI-Bussystem vernetzbaren Motorstarter eines Elektromotors vorzuschlagen, welche als offenes System konzipiert ist und vom jeweiligen Anwender individuell auf den jeweiligen Einsatz an Direkt- oder Wendestartern konfiguriert und an verschiedene Baugrößen von Elektromotoren mit der darauf resultierenden unterschiedlichen Leistungsaufnahme angepasst werden kann, so dass die Anzahl an unterschiedlichen Steuereinrichtungen für derartige Motorstarter drastisch reduziert werden kann.

Diese Aufgabe wird durch eine Steuereinrichtung nach Anspruch 1 und ein Verfahren nach Anspruch 15 gelöst.

Zur Lösung dieser gestellten Aufgabe schlägt die Erfindung eine Steuereinrichtung für einen über ein Bussystem vernetzbaren Motorstarter eines Elektromotors vor, der neben mindestens einer Auswerteeinheit für einen externen vorgebbar sind und die ferner eine programmierbare Steuerelektronik umfasst, die mit der mindestens einen Auswerteeinheit für den externen Temperatursensor, dem Stromwandlerblock und den Schaltelementen verbunden ist und über ein Interface an das Bussystem anschließbar ist und einen Datenspeicher aufweist. Erfindungsgemäß ist hierbei die Steuerelektronik in der Weise programmiert, dass eine periodische Ermittlung der von den externen Temperatursensoren über die Auswerteeinheit gewonnenen und von dem Stromwandlerblock erzeugten jeweiligen Messwerte erfolgt, der von den Schaltelementen vorgegebene Schaltzustand abgefragt wird, aus dem Datenspeicher ein tabellarisch hinterlegter Grenzwert in Abhängigkeit vom abgefragten Schaltzustand der Schaltelemente ausgelesen und mit dem Messwert des Stromwandlerblocks verglichen wird sowie der Messwert der mindestens einen Auswerteeinheit für den externen Temperatursensor mit einem vorgebbaren Grenzwert verglichen wird, vom Bussystem über das Interface erhaltene Daten abgefragt werden und in Abhängigkeit vom Schaltzustand der Schaltelemente ausgewertet und ein entsprechender Steuerbefehl für den Motorstarter erzeugt wird und letztlich der Motorstarter entsprechend des Steuerbefehls angesteuert bzw. bei Überschreitung eines Grenzwertes für die mindestens eine Auswerteeinheit eines externen Temperatursensors oder den Stromwandler geöffnet wird.

Erfindungsgemäß ist es bei der vorgeschlagenen Steuereinrichtung möglich, mittels der verschiedenen logischen Schaltzustände der Schaltelemente unterschiedliche Motorstarter zu konfigurieren und zu parametrieren.

So ist zunächst eine Anpassung der Steuereinrichtung für den Motorstarter an verschiedene leistungsmäßig unterschiedliche Baugrößen von Elektromotoren möglich, indem je nach vorgegebenem Schaltzustand der Schaltelemente unterschiedliche tabellarisch hinterlegte Grenzwerte aus dem Datenspeicher ausgelesen werden und sodann mit dem Messwert des Stromwandlerblocks verglichen werden. Auf diese Weise kann beispielsweise ein Motorschutzbereich von 0,18 bis 2,2 kW oder höher problemlos mit einer einzigen Steuereinrichtung für einen Motorstarter durch entsprechendes Vorgeben eines hiermit korrespondierenden Schaltzustandes der Schaltelemente eingestellt werden. In einer bevorzugten Ausführungsform der Erfindung kann mittels der Steuerelektronik ferner in Abhängigkeit von dem Schaltzustand der Schaltelemente auch eine Anpassung an unterschiedliche Ausbildungen der mit der Steuereinrichtung steuerbaren Motorstarter vorgenommen werden. So können je nach aus den Schaltelementen ausgelesenem Schaltzustand von der Steuerelektronik Steuerbefehle für einen als Direktstarter oder einen als Wendestarter ausgebildeten Motorstarter erzeugt werden. Auch diese Eignung der erfindungsgemäßen Steuereinrichtung gleichsam für einen Direktstarter als auch für einen Wendestarter kann durch einfaches Vorgeben einer entsprechenden Schaltstellung der Schaltelemente, die von der Steuerelektronik entsprechend ausgelesen wird, vorgenommen werden.

Die Steuereinrichtung kann ferner so programmiert sein, dass sie eine Wendestarterverriegelung umfasst, dergestalt, dass während erfolgter Ansteuerung eines Leistungsschützes des Motorstarters eine Ansteuerung eines weiteren Leistungsschützes des Motorstarters verhinderbar ist.

Die Schaltelemente, welche der erfindungsgemäßen Steuereinrichtung zur Konfigurierung auf einen Direkt- oder Wendestarter bzw. Parametrierung auf unterschiedliche Leistungsbereiche von zu schaltenden und zu überwachenden Elektromotoren dienen, können beispielsweise als DIP-Schalter, Jumper, Drehschalter und/oder über das Bussystem direkt per Softwarebefehl ansteuerbare Softwareschalter ausgebildet sein, so dass größtmögliche Flexibilität gewährleistet ist.

Die Schaltelemente können fernen einen Handschalter umfassen, mittels dessen der Motorstarter mit Vorrang vor den vom Bussystem erhaltenen Daten ansteuerbar ist, um beispielsweise einen Wendestarter mit Hand-Wende-Funktion über den Handschalter auszubilden. Auch ist es möglich, mittels eines solchen Handschalters eine Umkehrung der Laufrichtung des an den mit der erfindungsgemäßen Steuereinrichtung versehenen Motorstarter angeschlossenen Elektromotors zu bewirken, indem hierzu ein Phasentausch per Handschalter vorgenommen wird, was nachfolgend noch näher erläutert wird. Ebenso kann ein dauerhafter Phasentausch durch entsprechende Einstellung von DIP-Schaltern als Teil der Schaltelemente vorgenommen werden, so dass eine Default-Einstellung der Drehrichtung des an den Motorstarter angeschlossenen Elektromotors vorgebbar ist.

Die Steuerelektronik kann gemäß einer vorteilhaften Ausführungsform der Erfindung Eingänge aufweisen, die mit externen Schaltern, wie Lichtschranken oder Endschalter verbindbar sind und in Abhängigkeit vom Schaltzustand der Schaltelemente kann der Motorstarter bei Anliegen eines Schaltsignals der externen Schalter an einem Eingang geöffnet werden. Durch diese Ausführungsform erhält ein mit einer solchermaßen ausgebildeten Steuereinrichtung versehener Motorstarter zwei zusätzliche externe Eingänge, über die z.B. Lichtschranken und Endschalter angeschlossen werden können. In einer z.B. über die Schaltelemente konfigurierbaren Betriebsart können die Eingänge fest mit je einer Drehrichtung für den Elektromotor verknüpft werden, wobei bei Anliegen eines entsprechenden Schaltsignals vom angeschlossenen externen Schalter der Motorstarter sofort geöffnet wird, um beispielsweise in einer Gefahrensituation oder als Schnellstop für Positionieraufgaben den Elektromotor unmittelbar abzuschalten. Wird der Motorstarter über den Handschalter mit Vorrang vor dem Bussystem per Hand geschaltet, so wird der Antrieb in der entsprechenden von Hand angewählten Drehrichtung unterbrochen, auch wenn der Bediener von Hand weiterhin die Drehrichtung ansteuert. Auf diese Weise können beispielsweise mittels der erfindungsgemäßen Steuereinrichtung an einer Förderstrecke eingesetzte Motorstarter so ausgeführt werden, dass auf der Förderstrecke transportierte Fördergüter nicht in einen von Lichtschranken oder Endschaltern kontrollierten Gefahrenbereich automatisch oder von Hand eingefördert werden können. Wird der mit der erfindungsgemäßen Steuereinrichtung versehene Motorstarter im Automatikbetrieb betrieben, d.h. er empfängt seine Steuerbefehle über das Bussystem, so können die an den Eingängen angeschlossenen externen Schalter eine Schnellabschaltung des Elektromotors bewirken, da in diesem Falle die auf den Motorstarter einwirkende Steuerelektronik unmittelbar den Motorstarter öffnet und nicht erst der entsprechende Steuerbefehl über das Bussystem abgewartet werden muss, der aufgrund des längeren Signalweges erst mit einer gewissen Verzögerung eintreffen würde. Neben der Erhöhung der Gefahrensicherheit kann diese verkürzte Abschaltzeit auch für Positionieraufgaben verwendet werden, bei denen ein Fördergut an einer genau definierten und von an die Eingänge angeschlossenen Schaltern überwachten Stelle auf einer Förderbahn oder dergleichen zum Stehen kommen muss. Auf diese Weise wird die Sicherheit und der Nutzen für die Applikation eines mit der erfindungsgemäßen Steuereinrichtung ausgebildeten Motorstarters bedeutend gesteigert.

Die Steuerelektronik kann des weiteren eine Einrichtung zur Nachbildung der Erwärmung bzw. Abkühlung des Motors anhand der abgefragten Temperaturmesswerte aufweisen, die beispielsweise in Form einer E-Funktion im Datenspeicher abgelegt wird, so dass die Temperaturüberwachung des angeschlossenen Elektromotors weiter verbessert wird.

Darüber hinaus kann die Steuerelektronik des weiteren so programmiert sein, dass sie entsprechende Rückmeldedaten an das Bussystem abgibt, um eine automatisierte Steuerung eines an den solchermaßen ausgebildeten Motorstarter angeschlossenen Motors zu ermöglichen. Diese Rückmeldedaten können beispielsweise Bestätigungsmeldungen für Befehle sein, die vom Bussystem an die Steuereinrichtung gegeben worden sind und von der Steuerelektronik unter Auswertung der Messdaten sowie der Schaltstellung der Schaltelemente in einen entsprechenden Steuerbefehl für den Elektromotor umgesetzt worden sind. Auch können Warnmeldungen und Fehlermeldungen als Rückmeldedaten auf das Bussystem gegeben werden.

Die Steuereinrichtung gemäß der Erfindung kann ferner Anzeigeelemente zur Anzeige der Messwerte und/oder der erzeugten Steuerbefehle für den Motorstarter umfassen, um dem Bedienpersonal eine leichte Funktionskontrolle zu ermöglichen.

Die Schaltelemente der erfindungsgemäß ausgebildeten Steuereinrichtung können darüber hinaus auch weitere Merkmale des Motorstarters indizieren, die von der Steuerelektronik der Steuereinrichtung entsprechend umgesetzt werden. So kann die Steuerelektronik so programmiert sein, dass in Abhängigkeit vom Schaltzustand der Schaltelemente der Motorstarter unter Ausbildung einer Sanftbremse für den Elektromotor ansteuerbar ist oder auch bei Erzeugung eines Steuerbefehls zum Öffnen des Motorschalters ein Signal zur Ansteuerung einer eigen- oder fremdgespeisten Bremse für den Elektromotor erzeugbar ist.

Das der erfindungsgemäßen Steuereinrichtung zugrundeliegende Verfahren zur Steuerung des mit einem Bussystem, insbesondere ASI-Bussystem vernetzten Motorstarters für den Elektromotor beruht darauf, dass Temperatur- und Leistungsaufnahmemessdaten fortlaufend überwacht und mit Grenzwerten verglichen werden und zusätzlich die Daten aus dem Bussystem ausgewertet werden, wobei in Abhängigkeit von den ausgewerteten Daten und den überwachten Messwerten Steuerbefehle zur Ansteuerung des Motorstarters erzeugt werden. Zur Schaffung einer größtmöglichen Flexibilität wird erfindungsgemäß vorgeschlagen, dass über Schaltelemente unterschiedliche Konfigurationen und Parameter vorgegeben und gemeinsam mit den Daten aus dem Bussystem und den Messwerten ausgewertet werden, so dass als Direkt- oder Wendestarter ausgebildete Motorstarter ansteuerbar sind und Elektromotoren unterschiedlicher Leistungsaufnahme überwachbar sind.

Weitere Einzelheiten der Erfindung werden nachfolgend unter Bezugnahme auf die schematischen Zeichnungen näher erläutert. Es zeigen:
- Figur 1:: in schematisierter Darstellung ein Blockschaubild der erfindungsgemäßen Steuereinrichtung für einen Motorstarter;
- Fig. 2a, 2b:: als zusammengesetzte Figur ein schematisiertes Ablaufdiagramm der in der Steuerelektronik der Steuereinrichtung programmierten Software;
- Figur 3:: in schematisierter Darstellung den Einsatz der Steuereinrichtung an einem als Direktstarter ausgelegten Motorstarter;
- Figur 4:: in schematisierter Darstellung den Einsatz der Steuereinrichtung an einem als Wendestarter ausgelegten Motorstarter;
- Figur 5:: ein Ablaufdiagramm eines mit der Steuereinrichtung bewirkbaren Schnellstops bei Automatikbetrieb;
- Figur 6:: ein Ablaufdiagramm eines mit der Steuereinrichtung bewirkbaren verriegelten Handbetriebs eines Motorstarters.

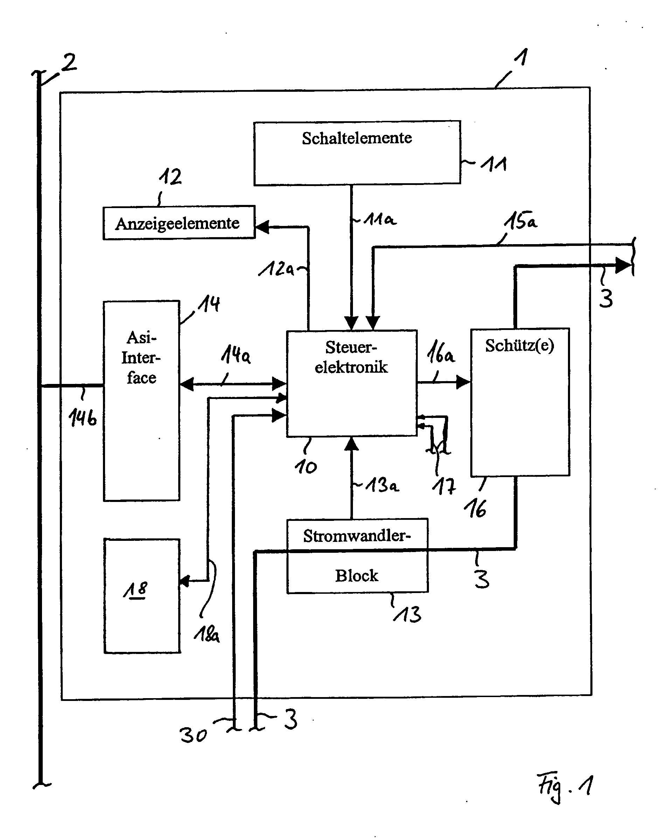

In der Figur 1 ist schematisch der Aufbau einer Steuereinrichtung für einen Motorstarter 1 dargestellt. Der Motorstarter 1 dient dazu, einen hier nicht dargestellten Elektromotor bei Bedarf ein- oder auszuschalten, wobei je nach Ausführungsform des Motorstarters 1 auch ein Wechsel der Laufrichtung vorgenommen werden kann und darüber hinaus der Elektromotor während seines Betriebs hinsichtlich seiner Betriebstemperatur und seiner Leistungsaufnahme zum Schutz vor Beschädigungen überwacht wird.

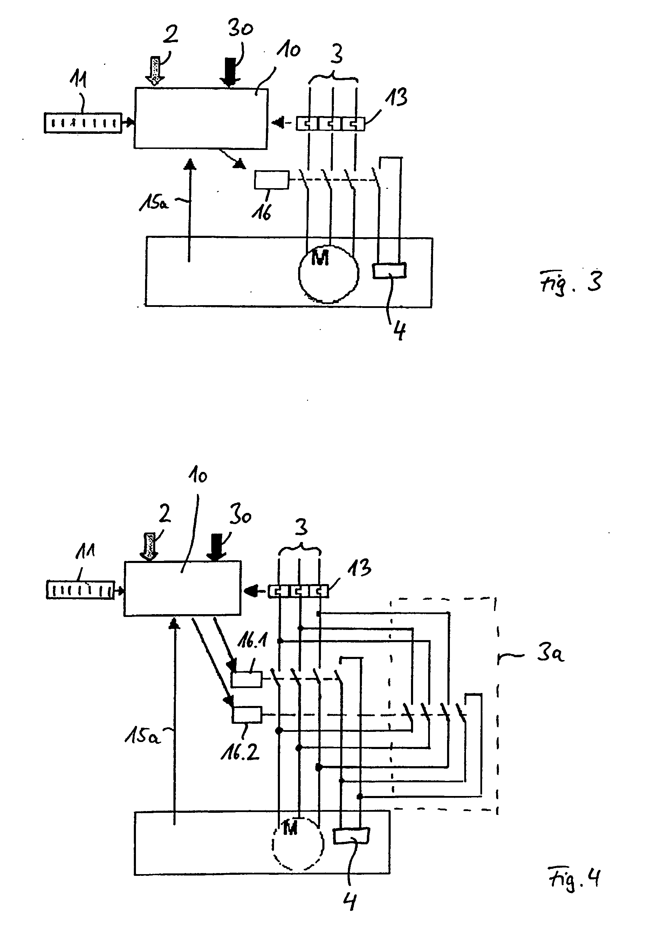

Wie in weiteren Einzelheiten auch aus den Darstellungen gemäß Figur 3 bzw. Figur 4 ersichtlich, wird der Motorstarter in eine Motorstromleitung 3, die üblicherweise dreiphasig aufgebaut ist, eingesetzt und ist mit Hilfe mindestens eines Schützes 16 im Falle eines Direktstarters gemäß Figur 3 bzw. mit zwei Schützen 16.1, 16.2 im Falle eines Wendestarters gemäß Figur 4 in der Lage, einen Elektromotor M bei Bedarf einzuschalten, indem die Schütze 16 bzw. 16.1 oder 16.2 und damit die Motorstromleitung 3 geschlossen oder aber geöffnet wird, um den Elektromotor M anzuhalten. Das Öffnen und Schließen des Schützes 16 bzw. der Schütze 16.1 oder 16.2 wird von einer Steuerelektronik 10 bewirkt, die entsprechende Steuerbefehle erzeugt und über eine Steuerleitung 16a an ein Schütz 16 bzw. 16.1 oder 16.2 abgibt.

Bei Ausbildung des Motorstarters als Direktstarter gemäß Figur 3 schaltet das einzige vorgesehene Leistungsschütz 16, welches auch als Hauptschütz bezeichnet wird, entsprechend der über das Bussystem 2 empfangenen Daten, die von der Steuereinrichtung 10 in einen Steuerbefehl umgesetzt werden, die Motorstromleitung 3 ein oder aus, um den Elektromotor M entsprechend in oder außer Betrieb zu setzen.

Im Falle eines Wendestarters gemäß Figur 4 ist mittels der beiden wechselweise ansteuerbaren Leistungsschütze 16.1 und 16.2 ein Ein- und Ausschalten des Elektromotors M und auch ein Wechsel der Laufrichtung desselben ermöglicht. Das Leistungsschütz 16.1 schaltet vergleichbar zum Ausführungsbeispiel gemäß Figur 3 die Motorstromleitung 3 zum Elektromotor M ein, um diesen in einer Drehrichtung in Betrieb zu nehmen. Ist jedoch das Leistungsschütz 16.1 geöffnet, kann durch Schließen des Leistungsschützes 16.2 der Elektromotor M über die mit Bezugsziffer 3a gekennzeichnete Verzweigung mit der Motorstromleitung 3 verbunden werden, wobei die Anschlüsse der Verzweigung 3a so geschaltet sind, dass die Phasen der Motorstromleitung 3 vertauscht werden und dementsprechend ein Betrieb des Elektromotors M in umgekehrter Laufrichtung erfolgen kann. Zusätzlich schalten die Leistungsschütze 16.1 bzw. 16.2 im Ausführungsbeispiel gemäß Figur 4 oder auch das einzige Leistungsschütz 16 im Ausführungsbeispiel gemäß Figur 3 auch einen weiteren Kontakt, der die Betätigung einer Motorbremse 4 beim Abschalten des Elektromotors M ermöglicht.

Zur Betätigung der Leistungsschütze 16 bzw. 16.1 und 16.2 kommuniziert die Steuerelektronik 10 über eine Leitung 14a mit einem ASI-Interface 14, welches über eine Anschlussleitung 14b in an sich bekannter Weise die Kommunikation mit einem Bussystem 2, hier einem ASI-Bus herstellt, über den beispielsweise Steuerbefehle repräsentierende Daten, die an die Steuerelektronik 10 des Motorstarters 1 adressiert sind, empfangen werden können und auch entsprechende Rückmeldungen von der Steuerelektronik 10 auf den ASI-Bus 2 gegeben werden können.

Um unlogische Steuerbefehle zu verhindern, ist die Steuereinrichtung 10 darüber hinaus in der Weise programmiert, dass sie eine Wendestarterverriegelung für den Wendestarter umfasst, in dem für den Zeitraum, in welchem eines der Leistungsschütze 16.1 bzw. 16.2 angesteuert wird und sich der Elektromotor 11 in der korrespondierenden Drehrichtung bewegt, keine Ansteuerung des jeweils anderen Leistungsschützes 16.2 bzw. 16.1 bewirkt werden kann. Wenn demgemäß über dem ASI-Bus ein Leistungsschütz 16.1 oder 16.2 angesteuert ist, werden nachfolgend über den ASI-Bus ankommende Einschaltbefehle für das jeweils andere Leistungsschütz ignoriert und von der Steuereinrichtung 10 nicht weitergeleitet.

Zur Sicherstellung der Motorschutzfunktion verfügt die Steuerelektronik 10 des weiteren über einen Eingang für eine Temperaturleitung 15a, die von mindestens einem im Elektromotor M untergebrachten externen Temperatursensor und einer zugehörigen Auswerteeinheit herangeführt wird und eine Überwachung der Betriebstemperatur des Elektromotors M ermöglicht. Als externe, im Elektromotor M untergebrachte Temperatursensoren kommen z.B. Thermistoren oder Thermoclickkontakte in Betracht, selbstverständlich können aber auch andere Bauformen zur Messung und Überwachung der Temperatur des Elektromotors M zur Anwendung gelangen.

Ferner weist die Steuerelektronik 10 einen Eingang für eine Leitung 13a auf, über die Messwerte eines Stromwandlerblocks 13 in der Motorstromleitung 3 eingelesen werden können, mittels derer eine Überwachung der Leistungsaufnahme des an die Motorstromleitung 3 angeschlossenen Elektromotors M ermöglicht ist. Die Steuerelektronik 10 wird zur Sicherstellung ihres Betriebs über eine Versorgungsleitung 30 mit der notwendigen Betriebsspannung versorgt. Hierbei können die Versorgungsleitung 30 und die Motorstromleitung 3 beispielsweise in einem gemeinsamen Stecker untergebracht und z. B. an ein Energiebussystem ankoppelbar sein, so dass einen einfache Installation des Motorstarters 1 ermöglicht ist. Während die Motorstromleitung 3 beispielsweise mit einer Spannung von 400 V beaufschlagt ist, wird die Versorgungsleitung 30 für die Steuerelektronik 10 mit einer Spannung von 24 V beispielhaft gespeist.

Die Steuerelektronik 10 verfügt des weiteren über einen Eingang für eine Leitung 11a, die die Steuerelektronik 10 mit Schaltelementen 11 verbindet, über die verschiedene logische Schaltzustände vorgegeben werden können, die von der Steuerelektronik eingelesen werden können. Diese Schaltelemente 11 können beispielsweise DIP-Schalter, Jumper, Handschalter und/oder über den ASI-Bus 2 direkt ansteuerbare Softwareschalter sein. Ferner sind an die Steuerelektronik 10 über eine Leitung 12a auch einen Vielzahl von Anzeigeelementen 12 angeschlossen, mittels derer verschiedene Betriebszustände des Motorstarters 1 sowie Fehlermeldungen und dergleichen mehr je nach Bedarf angezeigt werden können. Die Steuerelektronik (10) kommuniziert des weiteren über eine Leitung 18a mit einem Datenspeicher 18.

Die zum Einsatz kommende Motorschutzelektronik kann zur Vereinfachung der Herstellung im wesentlichen von der Elektronik digitaler Leistungsschalter übernommen werden und beispielsweise über einen 8 Bit Mikrocontroller der Firma Fujitsu mit der Bezeichnung MB 89P637 verfügen. Der ASI-Teil besteht z. B. aus einem ASI-Chip A²SI der Firma AMI und einem Standard 8051 Mikrocontroller.

Wesentlich für den erfindungsgemäßen Motorstarter 1 ist es, dass die in der Figur 1 dargestellte Steuereinrichtung Schaltelemente 11 umfasst, mittels derer der Steuerelektronik 10 unterschiedliche logische Schaltzustände vorgebbar sind. Beispielsweise durch Verwendung von Schaltelementen 11 in Form von DIP-Schaltern und/oder Jumpern können der Steuerelektronik 10 verschiedene Schaltzustände mitgeteilt werden, die diese in die Lage versetzen, einen Motorstarter mit nur einem Schütz 16 gemäß Figur 3 anzusteuern, der als Direktstarter ausgebildet ist oder auch alternativ zwei Schütze 16.1, 16.2 gemäß Figur 4 wechselweise anzusteuern, um bei ansonsten unveränderter Steuereinrichtung einen als Wendestarter ausgebildeten Motorstarter 1 anzusteuern.

Des weiteren können über die Schaltelemente 11 entsprechend der Schaltstellung der DIP-Schalter oder Jumper auch unterschiedliche Strombereiche eingestellt werden, die die Steuerelektronik 10 mit den vom Stromwandlerblock 13 gelieferten Messwerten, die der Leistungsaufnahme des Elektromotors M entsprechen, verglichen werden. Auf diese Weise kann durch einfaches Verändern der Schaltstellung der Schaltelemente 11 die Steuerelektronik 10 ohne sonstige bauliche Veränderungen an unterschiedliche Leistungsgrößen von anzuschließenden Elektromotoren M angepasst werden.

In der Tabelle 1 sind beispielhaft verschiedene Stellungen eines vierpoligen DIP-Schalters als Schaltelement 11 dargestellt, die unterschiedliche Strombereiche repräsentieren, mit denen die Steuerelektronik 10 die Messwerte des Stromwandlerblocks 13 vergleichen kann, um bei Überschreiten eines Grenzwertes eine Abschaltung des Elektromotors M durch entsprechende Ansteuerung des Schützes 16 bzw. der Schütze 16.1 und 16.2 hervorzurufen. Ein zusätzlich angebrachter Drehschalter kann darüber hinaus auch eine Feineinstellung des Stromwertes zwischen je zwei Strombereichen ermöglichen.

**Tabelle 1:**

| Pol | |
|---|---|
| 1 2 3 4 | Strom-Bereich einstellen |
| 1 0 0 0 | 0,6 A |
| 0 1 0 0 | 0,8 A |
| 1 1 0 0 | 1,0 A |
| 0 0 1 0 | 1,2A |
| 1 0 1 0 | 1,5 A |
| 0 1 1 0 | 1,7 A |
| 1 1 1 0 | 1,9 A |
| 0 0 0 1 | 2,1 A |
| 1 0 0 1 | 2,6 A |
| 0 1 0 1 | 3,6 A |
| 1 1 0 1 | 5,0 A |

Die Tabelle 2 zeigt darüber hinaus für zwei weitere Pole eines DIP-Schalters Konfigurationen, in denen die Steuerelektronik 10 auf einen Direktstarter eingestellt wird, während Tabelle 3 Konfigurationen für einen Wendestarter darstellt.

**Tabelle 2:**

| Pol | Jumper Pos. "rechts" ["OFF"] |
|---|---|
| 7 8 | Konfiguration |
| 0 0 | |
| 1 0 | Direktstarter |
| 0 1 | (nur das Hauptschütz wird angesteuert) |
| 1 1 | |

**Tabelle 3:**

| Pol | Jumper Pos. "links" ["ON"] |
|---|---|
| 7 8 | Konfiguration |
| 0 0 | Automatischer Wendestarter |
| 1 0 | Automatischer Wendestarter und Phasen L1, L3 getauscht |
| 0 1 | Direktstarter mit Hand-Wende-Funktion |
| 1 1 | Direktstarter mit Hand-Wende-Funktion und Phasen L1, L3 getauscht |

Die in der Tabelle 3 enthaltene Funktion "Automatischer Wendestarter und Phasen L1, L3 getauscht" dient dazu, mittels einfacher Konfiguration der Steuerelektronik 10 die Laufrichtung des Elektromotors M umzukehren, falls beim Anschluss desselben an die Motorstromleitung 3 die falsche Grundlaufrichtung des Elektromotors M vorliegt, z.B. bedingt durch mechanische Gründe wie Getriebe, Einbauposition etc. Hierdurch werden bei Inbetriebnahme einer Anlage aufwendige Neuverkabelungen bei Installationsfehlern minimiert.

Sofern die Schaltelemente 11 auch mit einem Handschalter, beispielsweise einem entsprechenden Schlüsselschalter ausgebildet sind, so können auch die des weiteren in der Tabelle 3 enthaltenen Konfigurationen "Direktstarter mit Hand-Wende-Funktion" und "Direktstarter mit Hand-Wende-Funktion und Phasen L1, L3 getauscht" erzielt werden, wobei die Steuerelektronik 10 vorzugsweise so programmiert ist, dass die Schaltstellungen des Handschalters mit Vorrang vor allen anderen Steuerbefehlen ausgeführt werden.

Der Motorstarter 1 kann ferner in an sich bekannter Weise mit einem mechanisch wirkenden Verklinkungsbaustein versehen sein, der bei aufgrund eines Kurzschlusses o.ä. verschweißtem Leistungsschütz 16.1 oder 16.2 und somit auch ohne Einschaltbefehl in der Ein-Stellung verbleibendem Leistungsschütz dafür sorgt, dass das jeweils andere Leistungsschütz nicht eingeschaltet werden kann, und zwar unabhängig von den Schaltbefehlen aus der Steuerelektronik 10.

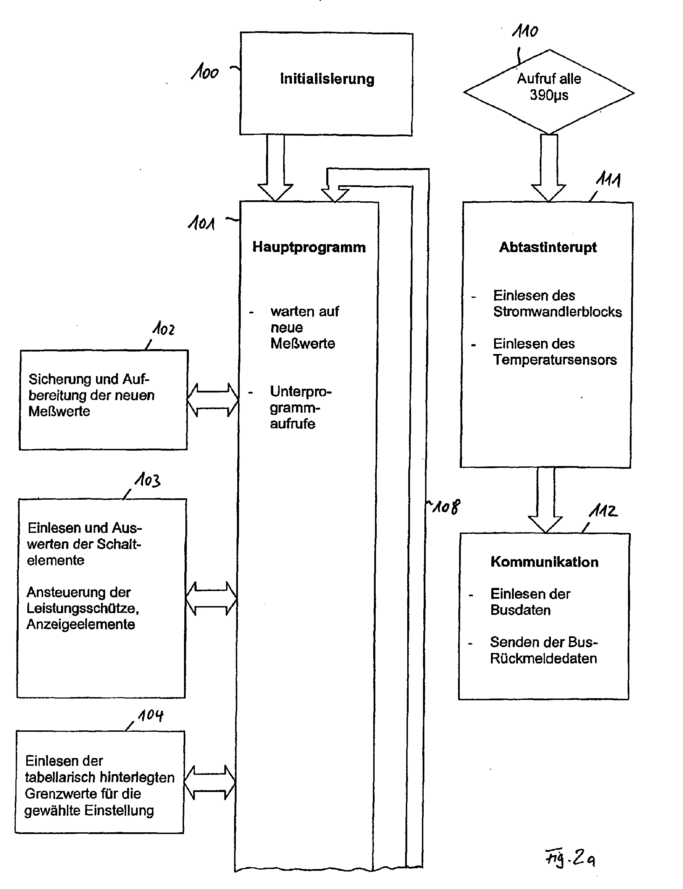

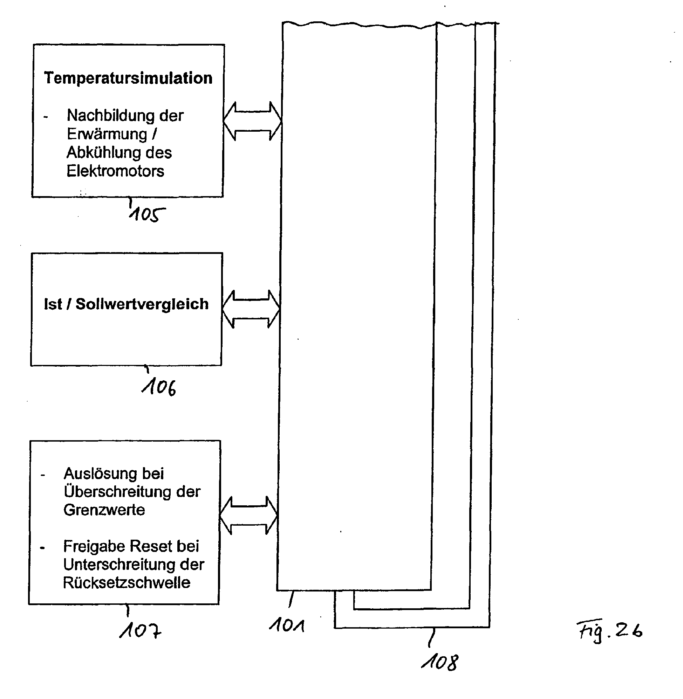

Im folgenden wird nun anhand des Blockschaubildes gemäß den Figuren 2a und 2b, die einander fortsetzen, die in der Steuerelektronik 10 ablaufende Programmierung in weiteren Einzelheiten erläutert.

Zunächst erfolgt bei 100 eine Initialisierung der Steuerelektronik und es wird das Hauptprogramm 101 aufgerufen, in welchem die Steuerelektronik 10 auf neue Messwerte vom Stromwandlerblock 13 und von den Auswerteeinheiten der externen Temperatursensoren wartet, die der Steuerelektronik 10 über die Leitungen 13a, 15a zugeführt werden. Es erfolgen ferner die Aufrufe der Unterprogramme, die nachfolgend näher erläutert werden.

So erfolgt beispielsweise alle 390 µs bei 110 der Aufruf eines Abtast-Interrupts 111, in welchem die Werte des Stromwandlerblocks 13 und der Auswerteeinheiten der externen Temperatursensoren über die Leitungen 13a und 15a eingelesen werden und bei 112 ferner die Kommunikation mit dem ASI-Bus 2 über das ASI-Interface 14 und die Leitungen 14a, 14b abgewickelt wird, indem die Busdaten, z. B. für Steuerbefehle wie "Motor einschalten", eingelesen und erzeugte Busrückmeldedaten gesendet werden.

Bei 102 werden die neuen Messwerte der Auswerteeinheiten der externen Temperatursensoren und des Stromwandlerblocks 13 gesichert und aufbereitet und bei 103 werden die Schaltelemente 11 bzw. die darin niedergelegte logische Schaltstellung beispielsweise gemäß Tabellen 1 bis 3 eingelesen und ausgewertet. In Abhängigkeit von dem bei 103 festgestellten Schaltstellung der Schaltelemente 11 wird bei 104 aus dem Datenspeicher 18 der Steuerelektronik 10 der mit dieser Schaltstellung korrespondierende und tabellarisch hinterlegte Grenzwert für die gewählte Einstellung über die Leitung 18a ausgelesen und bei 106 einem Ist-/Sollwert-Vergleich unterzogen, um festzustellen, ob die Messwerte des Stromwandlerblocks 13 unterhalb des entsprechend der Schaltstellung der Schaltelemente 11 ausgelesenen tabellarisch hinterlegten Grenzwert für die gewählte Einstellung liegt oder nicht. Hierdurch wird die variable Leistungsanpassung der Steuereinrichtung mit Messbereichen gemäß Tabelle 1 ermöglicht.

Ferner wird bei 105 eine Temperatursimulation durchgeführt, indem anhand der über die Leitung 15a herangeführten Temperaturmesswerte die Steuerelektronik eine Nachbildung der Erwärmung oder Abkühlung des Elektromotors M erzeugt.

Sofern der bei der Temperatursimulation gewonnene Erwärmungswert des Elektromotors M oberhalb des in der Steuerelektronik hinterlegten Grenzwertes liegt und/oder der vom Stromwandlerblock 13 gelieferte Messwert für die Leistungsaufnahme des Elektromotors M oberhalb des bei 104 eingelesenen tabellarisch hinterlegten Grenzwertes für die gewählte Einstellung liegt, wird ein Auslösebefehl bei 107 erzeugt und das an die Leitung 16a angeschlossene Leistungsschütz 16 bzw. 16.1 oder 16.2 geöffnet, um den Elektromotor M abzuschalten und vor einer Beschädigung zu schützen. Andernfalls erfolgt eine Motoransteuerung gemäß der vom Bussystem 2 erhaltenen Steuerbefehle. Diese Ansteuerung der Leistungsschütze 16 bzw. 16.1 oder 16.2 und damit verbunden auch der Anzeigeelemente 12 erfolgt im Unterprogramm, welches mit der Bezugsziffer 103 gekennzeichnet ist.

Sofern keine Auslösung nötig ist, wird bei 107 ein Freigabe-Reset erzeugt und über 108 erfolgt ein Rücksprung in das Hauptprogramm und ein neuer Abtast-Interrupt zum Einlesen der Messwerte und der Busdaten wird aufgerufen.

Wesentlich ist es hierbei, dass die Steuerelektronik 10 in Abhängigkeit von der Schaltstellung der Schaltelemente 11 sowohl die Daten, die über das ASI-Interface 14 aus dem ASI-Bus 2 bereitgestellt werden, d. h. die konkreten Befehle zur Ansteuerung des Elektromotors M, als auch die Messdaten des Stromwandlerblocks 13 und/oder der über die Auswerteeinheiten gewonnenen externen Temperatursensoren in Abhängigkeit von der jeweiligen logischen Schaltstellung der Schaltelemente 11 auswertet, um die Steuerung des Elektromotors M zu bewirken.

Auf diese Weise ist es möglich, mit einer einzigen Steuereinrichtung unterschiedlichste Motorstarter 1 anzusteuern, unabhängig davon, ob diese als Direkt- oder Wendestarter ausgelegt sind und darüber hinaus auch unterschiedlichste Leistungsgrößen von Elektromotoren M anzusteuern, da die entsprechenden Grenzwerte im Datenspeicher 18 der Steuerelektronik 10 hinterlegt und jeweils durch eine logische Schaltstellung der Schaltelemente 11 aktiviert werden.

Im Rahmen der Erfindung ist es daher insbesondere möglich, einen mit der Steuereinrichtung ausgebildeten Motorstarter 1 herzustellen, welcher individuell erweiterbar und konfigurierbar ist.

So kann in einer einfachen Ausführungsform der Motorstarter 1 ein Gehäuse mit Einbauraum für zwei Leistungsschütze aufweisen, jedoch nur mit einem einzelnen Leistungsschütz 16 bestückt sein, wodurch bei entsprechender Stellung der Schaltelemente 11 ein Direktstarter gemäß Figur 3 mit einem elektronisch auswählbaren Motorschutz bis beispielsweise 2,2 kW ausgebildet werden kann. Neben der Ansteuerung des Leistungsschützes 16 zum Ein- und Ausschalten des Elektromotors M kann überdies noch ein weiterer Kontakt bzw. ein Signal zur Betätigung einer Bremse 4 für den Elektromotor M geschaltet werden.

Durch Einbau eines weiteren Leistungsschützes in den vorhandenen zweiten Einbauraum des Motorstarters wird eine Konfiguration mit zwei Leistungsschützen 16.1, 16.2 gemäß Figur 4 erreicht, wobei durch entsprechende Stellung der Schaltelemente 11 die Steuerelektronik 10 auf einfache Weise auf die Ansteuerung als Wendestarter umgestellt werden kann, wobei wiederum der Motorschutz frei wählbar und an den jeweiligen Elektromotor M anpassbar ist. Das Leistungsschütz 16.1 dient der Einschaltung des Elektromotors M in einer ersten Laufrichtung, Leistungsschütz 16.2 in der hierzu entgegengesetzten Laufrichtung.

Bei Ausbildung des Motorstarters 1 mit zwei Schützen 16.1, 16.2 ist neben einer Ansteuerung als automatischer Wendestarter in Verbindung mit einem Handschalter als weiteres Schaltelement 11 auch die Ausbildung als Direktstarter mit über den Handschalter manuell betätigbarem Wendeschütz oder auch die Erzeugung eines Phasentausches mittels DIP-Schaltern möglich, um die Laufrichtung des Elektromotors M umzukehren, auch wenn dieser bereits an die Motorstromleitung 3 angeschlossen worden ist.

Selbstverständlich kann auch vorgesehen sein, über eine bestimmte Schaltstellung der Schaltelemente 11 auch einen Wechsel der Zuordnung der Leistungsschütze 16.1 und 16.2 zu erzeugten Steuerbefehlen vorzunehmen, so dass ebenfalls eine Änderung der Laufrichtungslogik des Elektromotors M ohne Neuverkabelung ermöglicht ist.

Eine weitere logische Schaltstellung einzelner Schaltelemente 11 kann ferner die Ausbildung einer Sanftbremse für den Elektromotor M erzeugen. Hierbei werden die drei Phasen der Motorstromleitung 3 über beide Leistungsschütze 16.1 und 16.2 geschaltet, beispielsweise zwei Phasen über Leistungsschalter 16.1 und die dritte Phase über Leistungsschütz 16.2. Beim Ausschalten des Elektromotors M steuert sodann die über diese Schaltstellung der Schaltelemente 11 konfigurierte Steuerelektronik 10 zunächst die Abschaltung des Leistungsschützes 16.2 und erst mit einer gegebenenfalls wählbaren Zeitverzögerung auch die Abschaltung des Leistungsschützes 16.1, so dass der Elektromotor M noch einen gewissen Nachlauf - die Sanftbremse - beim Abschalten ausführt.

Sämtliche vorgenannten Konfigurationen können durch jeweils eine entsprechend zugewiesene logische Schaltstellung der Schaltelemente 11 indiziert, d. h. konfiguriert werden, wobei darüber hinaus auch der Motorschutz durch Auswahl der entsprechenden Grenzwerte in weiten Grenzen an die Größe des angeschlossenen Elektromotors M angepasst werden kann, d. h. entsprechend parametriert werden kann.

Weitere Konfigurierungsmöglichkeiten der mit der Steuerelektronik 10 ausgerüsteten Steuereinrichtung für den Motorstarter 1 gemäß Figur 1 ergeben sich dadurch, dass die Steuerelektronik 10 zusätzlich Eingänge 17, hier beispielsweise zwei solcher Eingänge 17 aufweist, an die nicht näher dargestellte externe Schalter, beispielsweise Lichtschranken oder Endschalter angeschlossen werden können. Diese Schalter können beispielsweise an einer Förderstrecke angeordnet sein und Gefahrenbereiche überwachen, in die zu förderndes Gut nicht eingefördert werden darf, wobei der Antrieb der Fördereinrichtung über den Motorstarter 1 und einen hieran angeschlossenen Elektromotor M bewirkt wird.

Über diese Eingänge 17 ist die Steuerelektronik 10 zunächst in der Lage, die von den Schaltern abgegebenen Schaltimpulse über das ASI-Interface 14 auf den ASI-Bus 2 zu geben, um einen entsprechenden Schaltzustand, beispielsweise Eintritt eines Förderguts in einen überwachten Gefahrenbereich auf dem ASI-Bus 2 zu signalisieren, so dass ein entsprechendes Stopsignal an die Steuerelektronik 10 über den ASI-Bus 2 und eine daran angeschlossene SPS oder dergleichen abgegeben werden kann. Zusätzlich aber ist die Steuerelektronik 10 durch entsprechende Konfigurierung mittels der Schaltelemente 11 in der Lage, bei Anliegen eines entsprechenden Messsignals an den Eingängen 17 selbsttätig und unmittelbar bereits eine Öffnung des Motorstarters 1 zu veranlassen, ohne den entsprechenden Steuerbefehl vom ASI-Bus 2 abwarten zu müssen. Hieraus ergibt sich ein deutlicher Zeitvorteil und eine schnellstmögliche Reaktion auf das entsprechende Schaltsignal des an den Eingang 17 angeschlossenen Schalters, da die an den ASI-Bus 2 angeschlossene SPS ein entsprechendes Ausschaltsignal allenfalls verzögert abgeben kann, da hier noch Verarbeitungszyklen sowie der längere Signalweg einkalkuliert werden müssen.

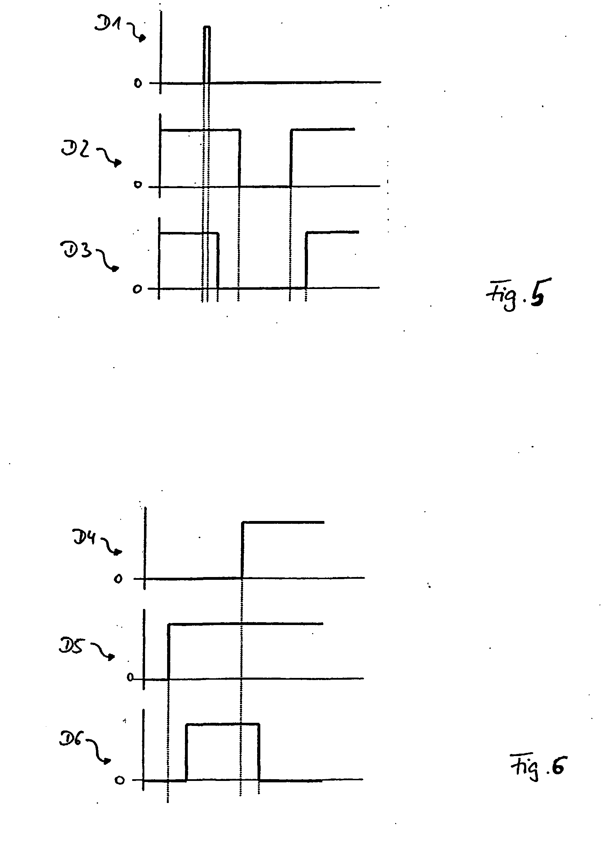

In der Figur 5 ist schematisch ein Ablaufdiagramm über die Zeit dargestellt, welches eine solche unmittelbar von der Steuerelektronik 10 veranlasste Öffnung des Motorstarters 1 zur Ausbildung eines Schnellstops bei Automatikbetrieb darstellt. Man erkennt von oben nach unten gesehen zunächst das Schaltdiagramm D1 des an den Eingang 17 angeschlossenen Schalters, im darunter liegenden Diagramm D2 den zeitlich verzögerten Ausschaltbefehl, welcher über das den ASI-Bus 2 an die Steuerelektronik 10 abgegeben wird und im untersten Diagramm D3 die demgegenüber beschleunigte Öffnung des Motorstarters aufgrund der unmittelbaren Veranlassung durch die Steuerelektronik 10. Der mit zeitlicher Verzögerung über das den ASI-Bus 2 eintreffende Abschaltbefehl dient hierbei lediglich als Reset-Befehl, um ein erneutes Einschalten des Motorstarters 1 im Automatikbetrieb zu ermöglichen.

Es können auf diese Weise Reaktionszeiten bis zum Öffnen des Motorstarters 1 von z.B. maximal 30ms realisiert werden, was eine bedeutende Verkürzung gegenüber der Busansteuerung darstellt.

Wird der Motorstarter 1 in der vorangehend bereits erläuterten Weise über einen Handschalter in Handbetrieb gefahren, so kann die Steuerelektronik 10 bei Anliegen eines entsprechenden Signals an einem der Eingänge 17 ebenfalls den Motorstarter 1 unmittelbar öffnen und einen weiteren Betrieb in dieser Drehrichtung unterbinden.

In der Figur 6 ist ein entsprechendes Ablaufdiagramm für einen solchermaßen verriegelten Handbetrieb des Motorstarters 1 dargestellt. Im obersten der drei übereinander angeordneten Diagramme D4 ist die Signalflanke des an den Eingang 17 angeschlossenen Schalters dargestellt, im mittleren Diagramm D5 die Stellung des Handschalters sowie im untersten Diagramm D6 der vom Motorstarter 1 geschaltete Motorstrom zum Elektromotor M.

Man erkennt, dass nach der ansteigenden Signalflanke des am Eingang 17 angeschlossenen Schalters (Diagramm D4) in der gewählten Drehrichtung nicht mehr per Handbetrieb gefahren werden kann, wobei bei einer Ausbildung des Motorstarters 1 als Wendestarter selbstverständlich in der entgegengesetzten Drehrichtung gefahren werden kann. Die gesperrte Drehrichtung kann bei Betrieb in entgegengesetzter Drehrichtung erst nach Erkennung der abfallenden Flanke des an den Eingang 17 angeschlossenen Schalters (Diagramm D5) wieder per Hand geschaltet werden.

Dieser vorangehend dargestellte sogenannte verriegelte Handbetrieb kann z.B. mit einem der als DIP-Schalter ausgebildeten Schaltelemente 11 zur entsprechenden Ansteuerung der Steuerelektronik 10 frei konfiguriert werden.

Beispielsweise ist auch eine Anpassung an die Schaltcharakteristik der an die Eingänge 17 anschließbaren Schalter möglich, etwa im Hinblick auf Signalabgabe durch ausbleibenden Signalstrom oder erzeugten Signalstrom von dem Schalter.

Auf diese Weise wird mit einem einzigen Motorstarter mit entsprechender Steuereinrichtung größtmögliche Flexibilität erreicht, so dass die Vielzahl der unterschiedlichen Motorstarter in verschiedenen Ausführungen als Direkt- oder Wendestarter und mit verschiedenen Motorschutzbereichen entfallen kann. Es ist lediglich noch notwendig, dem Motorstarter oder einer Gruppe solcher Motorstarter vorgelagert eine Kurzschlusssicherung in die Motorstromleitung 3 einzusetzen, dies kann jedoch in an sich bekannter Weise erfolgen. Insbesondere ist eine modulare Bauweise eines Motorstarters mit individuell anpassbarer und ausbaubarer Steuereinrichtung ermöglicht, wobei ausgehend von einem einfachen Direktstarter durch Einbau eines weiteren Leistungsschützes sowie gegebenenfalls eines Handschalters zusätzliche Funktionen einfach hinzugefügt werden können und die Motorschutzfunktionen schnell und einfach durch Änderung der Schaltstellung der Schaltelemente an geänderte Leistungsdaten des angeschlossenen Elektromotors angepasst werden können.

## Patentansprüche

1. Steuereinrichtung für einen über ein Bussystem (2) vernetzbaren Motorstarter (1) eines Elektromotors (M), umfassend mindestens eine Auswerteeinheit, einen Stromwandlerblock (13) zur Messung der Leistungsaufnahme des Elektromotors (M), Schaltelemente (11), mittels derer unterschiedliche Schaltzustände vorgebbar sind und eine programmierbare Steuerelektronik (10), die mit der mindestens einen Auswerteeinheit für einen externen Temperatursensor, dem Stromwandlerblock (13) und den Schaltelementen (11) verbunden ist und über ein Interface (14) an das Bussystem (2) anschließbar ist und einen Datenspeicher (18) aufweist, wobei die Steuerelektronik (10) in der Weise programmiert ist, dass
- eine periodische Ermittlung der von den Auswerteeinheiten und dem Stromwandlerblock (13) erzeugten Messwerte erfolgt,
- der von den Schaltelementen (11) vorgegebene Schaltzustand abgefragt wird,
- aus dem Datenspeicher (10) ein tabellarisch hinterlegter Grenzwert in Abhängigkeit vom Schaltzustand der Schaltelemente (11) ausgelesen und mit dem Messwert des Stromwandlerblocks (13) verglichen wird sowie der Messwert der mindestens einen Auswerteeinheit mit einem vorgebbaren Grenzwert vergleichen wird, und
- der Motorstarter (1) entsprechend des Steuerbefehls angesteuert bzw. bei Überschreitung eines Grenzwertes für die mindestens eine Auswerteeinheit oder den Stromwandlerblock (13) geöffnet wird,
**dadurch gekennzeichnet, dass**
- die Auswerteeinheit für einen externen Temperatursensor zur Messung der Temperatur des Elektromotors (M) vorgesehen ist, und dass,
- die vom Bussystem (2) über das Interface (14) erhaltene Daten abgefragt werden und in Abhängigkeit vom Schaltzustand der Schaltelemente (11) ausgewertet und hieraus ein entsprechender Steuerbefehl für den Motorstarter (1) erzeugt wird.

2. Steuereinrichtung nach Anspruch 1, **dadurch gekennzeichnet, dass** mittels der Steuerelektronik (10) in Abhängigkeit von dem Schaltzustand der Schaltelemente (11) Steuerbefehle für einen als Direktstarter oder einen als Wendestarter ausgebildeten Motorstarter (1) erzeugbar sind.

3. Steuereinrichtung nach Anspruch 2, **dadurch gekennzeichnet, dass** sie eine Wendestarterverriegelung umfasst, mittels derer während erfolgter Ansteuerung eines Leistungsschützes des Motorstarters eine Ansteuerung eines weiteren Leistungsschützes des Motorstarters verhinderbar ist.

4. Steuereinrichtung nach einem der Ansprüche 1 bis 3, **dadurch gekennzeichnet, dass** die Schaltelemente (11) als DIP-Schalter, Jumper, Drehschalter und/oder über das Bussystem (2) ansteuerbare Softwareschalter ausgebildet sind.

5. Steuereinrichtung nach einem der Ansprüche 1 bis 4, **dadurch gekennzeichnet, dass** die Schaltelemente (11) einen Handschalter umfassen, mittels dessen der Motorstarter (1) mit Vorrang vor den vom Bussystem (2) erhaltenen Daten ansteuerbar ist.

6. Steuereinrichtung nach einem der Ansprüche 1 bis 5, **dadurch gekennzeichnet, dass** die Steuerelektronik (10) Eingänge (17) aufweist, die mit externen Schaltern, wie Lichtschranken oder Endschalter verbindbar sind und in Abhängigkeit vom Schaltzustand der Schaltelemente (11) der Motorstarter bei Anliegen eines Schaltsignals der externen Schalter an einem Eingang (17) geöffnet wird.

7. Steuereinrichtung nach einem der Ansprüche 1 bis 6, **dadurch gekennzeichnet, dass** die Steuerelektronik (10) des weiteren eine Einrichtung zur Nachbildung der Erwärmung bzw. Abkühlung des Elektromotors (M)
anhand der abgefragten Messwerte der mindestens eine Auswerteeinheit für einen externen Temperatursensor aufweist.

8. Steuereinrichtung nach einem der Ansprüche 1 bis 7, **dadurch gekennzeichnet, dass** die Steuerelektronik (10) des weiteren so programmiert ist, dass sie Rückmeldedaten über das Interface (14) an das Bussystem (2) abgibt.

9. Steuereinrichtung nach einem der Ansprüche 1 bis 8, **dadurch gekennzeichnet, dass** Anzeigeelemente (12) zur Anzeige der Messwerte und der erzeugten Steuerbefehle für den Motorstarter (1) vorgesehen sind.

10. Steuereinrichtung nach einem der Ansprüche 1 bis 9, **dadurch gekennzeichnet, dass** die Steuerelektronik (10) des weiteren so programmiert ist, dass in Abhängigkeit vom Schaltzustand der Schaltelemente (11) der Motorstarter (1) unter Ausbildung einer Sanftbremse für den Elektromotor (M) ansteuerbar ist

11. Steuereinrichtung nach einem der Ansprüche 1 bis 10, **dadurch gekennzeichnet, dass** die Steuerelektronik (10) des weiteren so programmiert ist, dass in Abhängigkeit vom Schaltzustand der Schaltelemente (11) die Laufrichtung des Elektromotors (M) umkehrbar ist.

12. Steuereinrichtung nach einem der Ansprüche 1 bis 11, **dadurch gekennzeichnet, dass** die Steuerelektronik (10) des weiteren so programmiert ist, dass bei Erzeugung eines Steuerbefehls zum Öffnen des Motorstarters (1) ein Signal zur Ansteuerung einer eigen- oder fremdgespeisten Bremse (4) für den Elektromotor (M) erzeugt wird.

13. Motorstarter, **gekennzeichnet durch** eine zugehörige Steuereinrichtung gemäß einem der vorangehenden Ansprüche.

14. Motorstarter nach Anspruch 13, **gekennzeichnet durch** ein Gehäuse mit zwei Einbauräumen für von der Steuereinrichtung ansteuerbare Leistungsschütze (16.1, 16.2) für den Elektromotor (M), so dass wahlweise ein Direkt- oder Wendestarter ausbildbar ist, der mittels der Schaltelemente (11) konfigurierbar und parametrierbar ist.

15. Verfahren zur Steuerung eines mit einem Bussystem (2) vernetzten Motorstarters (1) nach Anspruch 13 für einen Elektromotor (M), bei welchem Temperatur und Leistungsmessdaten des Elektromotors (M) fortlaufend überwacht und mit Grenzwerten verglichen werden und Daten aus dem Bussystem (2) ausgewertet werden und in Abhängigkeit von den ausgewerteten Daten und den überwachten Messwerten Steuerbefehle zur Ansteuerung des Motorstarters erzeugt werden, **dadurch gekennzeichnet, dass** über Schaltelemente (11) unterschiedliche Konfigurationen und Parameter vorgegeben und gemeinsam mit den Daten aus dem Bussystem (2) und den Messwerten zur Erzeugung der Steuerbefehle ausgewertet werden, so dass als Direkt- oder Wendestarter ausgebildete Motorstarter (1) ansteuerbar sind und Elektromotoren (M) unterschiedlicher Leistungsaufnahme überwachbar sind.

## Claims

1. Control device for a motor starter (1) of an electric motor (M), which can be network-connected via a bus system (2), comprising at least one evaluation unit, a current transformer block (13) for measuring the power consumption of the electric motor (M), switching elements (11) by means of which different switching states are pre-settable, and a programmable electronic control unit (10) which is connected to the at least one evaluation unit for an external temperature sensor, the current transformer block (13) and the switching elements (11) and can be linked to the bus system (2) through an interface (14) and comprises a data storage device (18), the electronic control unit (10) being programmed in such a way that
- a periodic determination is carried out of the measured values generated by the evaluation units and the current transformer block (13),
- the switching state set by the switching elements (11) is polled,
- a threshold value stored in tabular form is read from the data storage device (10) based on the switching state of the switching elements (11) and compared with the measured value of the current transformer block (13), and the measured value of the at least one evaluation unit is compared with a pre-settable threshold value, and
- the motor starter (1), corresponding to the control command, is activated, or, if a threshold value for the at least one evaluation unit or the current transformer block (13) exceeded, opened,
**characterised in that**
- the evaluation unit for an external temperature sensor is provided for measuring the temperature of the electric motor (M), and that
- the data received from the bus (2) through the interface (14) are polled and evaluated based on the switching state of the switching elements (11), and a control command for the motor starter (1) is generated therefrom.

2. Control device according to claim 1, **characterised in that** control commands for a motor starter (1) configured as a direct starter or as a reversing starter can be generated by means of the electronic control unit (10) based on the switching state of the switching elements (11).

3. Control device according to claim 2, **characterised in that** it comprises a reversing starter lock by means of which, while one power contactor of the motor starter has been activated, an activation of another power contactor of the motor starter can be prevented.

4. Control device according to any one of the claims 1 to 3, **characterised in that** the switching elements (11) are configured as DIP switches, jumpers, rotary switches and/or software switches that can be activated through the bus system (2).

5. Control device according to any one of the claims 1 to 4, **characterised in that** the switching elements (11) comprise a manual switch by means of which the motor starter (1) can be activated with priority to the data obtained from the bus system (2).

6. Control device according to any one of the claims 1 to 5, **characterised in that** the electronic control unit (10) comprises inputs (17) that can be connected to external switches such as light barriers or limit switches, and that, based on the switching state of the switching elements (11), the motor starter is opened when a switching signal of the external switches on one input (17) is present.

7. Control device according to any one of the claims 1 to 6, **characterised in that** the electronic control unit (10) further comprises a device for reproducing the heating-up or cooling-down of the electric motor based on the polled measured values of the at least one evaluation unit for an external temperature sensor.

8. Control device according to any one of the claims 1 to 7, **characterised in that** the electronic control unit (10) further is programmed in such a way that it outputs feedback data through the interface (14) to the bus system (2).

9. Control device according to any one of the claims 1 to 8, **characterised in that** display elements (12) are provided for displaying the measured values and the generated control commands for the motor starter (1).

10. Control device according to any one of the claims 1 to 9, **characterised in that** the electronic control unit (10) further is programmed in such a way that the motor starter (1) can be activated, based on the switching state of the switching elements (11), forming a soft brake for the electric motor (M).

11. Control device according to any one of the claims 1 to 10, **characterised in that** the electronic control unit (10) further is programmed in such a way that the running direction of the electric motor (M) can be reversed based on the switching state of the switching elements (11).

12. Control device according to any one of the claims 1 to 11, **characterised in that** the electronic control unit (10) further is programmed in such a way that a signal for activating an internally or externally powered brake (4) for the electric motor (M) is generated upon generation of a control command for opening the motor starter (1).

13. Motor starter, **characterised by** an associated control device according to any one of the preceding claims.

14. Motor starter according to claim 13, **characterised by** a housing with two insertion spaces for power contactors (16.1, 16.2) for the electric motor (M) that can be activated by the control device, so that a direct or reversing starter can optionally be formed which can be configured and parameterized by means of the switching elements (11).

15. Method for controlling a motor starter (1) for an electric motor (M) according to claim 13 that is network-connected to a bus system (2), in which the temperature and the measured power values of the electric motor (M) are continuously monitored and compared with threshold values, and data from the bus system (2) are evaluated, and control commands for activating the motor starter are generated based on the evaluated data and the monitored measured values, **characterised in that** different configurations and parameters are pre-set through switching elements (11) and evaluated together with the data from the bus system (2) and the measured values for generating the control commands, so that motor starters (1) configured as direct or reversing starters can be activated and electric motors (M) with different power consumptions can be monitored.

## Revendications

1. Dispositif de commande pour un démarreur de moteur (1) d'un moteur électrique (M), pouvant être mis en réseau sur un système de bus (2), comprenant au moins une unité d'évaluation, un bloc transformateur de courant (13) pour la mesure de l'augmentation de puissance du moteur électrique (M), des éléments de commutation (11) au moyen desquels des états de commutation divers peuvent être prévus et une électronique de commande (10) programmée qui est reliée avec au moins une unité d'évaluation d'un capteur de température externe, au bloc transformateur de courant (13) et aux éléments de commutation (11) et peut être raccordée au système de bus (2) par l'intermédiaire d'une interface (14) et présente une mémoire de données (18), l'électronique de commande (10) étant programmée de sorte
qu'une information périodique sur les valeurs de mesure à partir des unités d'évaluation et du bloc transformateur de courant (13) ait lieu,
qu'il y ait une interrogation de l'état de commutation prévu par les éléments de commutation (11),
qu'une valeur limite déposée sous forme de tableau à partir de la mémoire de données (10) en relation avec l'état de commutation des éléments de commutation (11) soit lue et comparée à la valeur mesurée du bloc transformateur de courant (13), de même que la valeur de mesure d'au moins une unité d'évaluation soit comparée à une valeur limite pouvant être prévue, et
que le démarreur (1) de moteur soit démarré selon l'instruction de la commande, ou bien en cas de dépassement d'une valeur limite pour laquelle au moins une unité d'évaluation ou le bloc transformateur de courant (13) est ouvert,
**caractérisé en ce que**
l'unité d'évaluation est prévue pour un capteur de température externe pour la mesure de la température d'un moteur électrique (M), et que
les données recueillies du système bus (2) par l'interface (14) sont consultées et évaluées en relation avec l'état de commutation des éléments de commutation (11) et qu'ainsi une instruction de commande appropriée pour le démarreur (1) du véhicule se trouve générée.

2. Dispositif de commande selon la revendication 1 **caractérisé en ce qu'**au moyen de l'électronique de commande (10) en relation avec l'état de commutation des éléments de commutation (11) des instructions de commande peuvent être générées pour un démarreur de moteur (1) sous forme de démarreur direct ou de démarreur inverseur.

3. Dispositif de commande selon la revendication 2 **caractérisé en ce qu'**il comprend un verrouillage du démarreur inverseur grâce auquel, pendant son démarrage réussi, une protection du circuit du démarreur du moteur empêche une commande d'une autre protection de circuit du démarreur du moteur.

4. Dispositif de commande selon l'une des revendications de 1 à 3 **caractérisé en ce que** les éléments de commutation (11) sont sous la forme de commutateurs DIP, de cavaliers, de commutateurs rotatifs et/ou de commutateurs de software pouvant être commandés par l'intermédiaire du système bus (2).

5. Dispositif de commande selon l'une des revendications de 1 à 4 **caractérisé en ce que** les éléments de commutations (11) comprennent un commutateur manuel par lequel le démarreur du moteur (1) peut être commandé en priorité par rapport aux données reçues du système bus (2).

6. Dispositif de commande selon l'une des revendications de 1 à 5 **caractérisé en ce que** l'électronique de la commande (10) présente des entrées (17) qui peuvent être reliées avec des commutateurs externes, comme des cellules photoélectriques ou des interrupteurs de fin de course, et en relation avec l'état de commutation des éléments de commutation (11), le démarreur du moteur est ouvert à une entrée (17) lors de la mise en place d'un signal de commutation des commutateurs externes.

7. Dispositif de commande selon l'une des revendications de 1 à 6 **caractérisé en ce que** l'électronique de la commande (10) présente en outre un dispositif pour la reproduction du réchauffement, respectivement du refroidissement du moteur électrique (M) grâce aux valeurs des mesures consultées d'au moins une unité d'estimation pour un capteur de température externe.

8. Dispositif de commande selon l'une des revendications de 1 à 7 **caractérisé en ce que** l'électronique de la commande (10) est en outre programmée de sorte qu'elle transmet des données de rappel par l'intermédiaire de l'interface (14) au système de bus (2).

9. Dispositif de commande selon l'une des revendications de 1 à 8 **caractérisé en ce que** des éléments indicateurs (12) pour l'indication des valeurs de mesure et des instructions de commande générées pour le démarreur du moteur (1) sont prévus.

10. Dispositif de commande selon l'une des revendications de 1 à 9 **caractérisé en ce que** l'électronique de la commande (10) est en outre programmée de sorte qu'en relation avec l'état de commutation des éléments de commutation (11) le démarreur du moteur (1) peut être commandé par la formation d'un frein en douceur pour le moteur électrique (M).

11. Dispositif selon l'une des revendications de 1 à 10 **caractérisé en ce que** l'électronique de la commande (10) est en outre programmée de sorte qu'en relation avec l'état de commutation des éléments de commutation (11) le sens de marche du moteur électrique (M) peut être inversé.

12. Dispositif de commande selon l'une des revendications de 1 à 11 **caractérisé en ce que** l'électronique de la commande (10) est en outre programmée de sorte que lors de la génération de l'instruction de la commande pour l'ouverture du démarreur du moteur (1), un signal pour la commande d'un frein (4), qui lui est propre ou extérieur, est généré pour le moteur électrique (M).

13. Démarreur de moteur **caractérisé par** un dispositif de commande selon les revendications précédentes.

14. Démarreur de moteur selon la revendication 13 **caractérisé par** un boîtier avec deux espaces pour des contacteurs de puissance (16.1, 16.2) pouvant être commandés par le dispositif de commande pour le moteur électrique (M) de sorte qu'un démarreur, au choix, direct ou inverseur, qui est configurable et paramétrable au moyen des éléments de commutation (11), peut être réalisé.

15. Procédé de commande d'un démarreur de moteur (1) pour un moteur électrique (M) en réseau avec un système de bus (2) selon la revendication 13 pour lequel la température et les données des mesures de puissance du moteur électrique (M) sont contrôlées en continu et comparées à des valeurs limites, et des données sont évaluées à partir du système de bus (2) et en relation avec les données évaluées et les valeurs de mesures surveillées, des instructions de commande pour le démarrage du démarreur de moteur sont générées, **caractérisé en ce que** des configurations différentes et des paramètres sont préréglés par l'intermédiaire des éléments de commutation (11) et évalués conjointement avec les données du système de bus (2) et les valeurs des mesures pour la génération d'instructions de commande, de sorte que le démarreur du moteur (1) peut être commandé sous la forme d'un démarreur direct ou inverseur et que des moteurs électriques (M) de puissances diverses peuvent être surveillés.
